# EUROPEAN PATENT APPLICATION

(11) **EP 3 319 195 A1**
(43) Date of publication of application: **09.05.2018**
(21) Application number: 17168658.7
(22) Date of filing: 28.04.2017
(51) Int. Cl.: H02J 3/38, H02J 13/00

(54) **PHOTOVOLTAIC INVERTER SYSTEM**

(30) Priority: 04.11.2016 CN 201621186509 U
(71) Applicant: Sungrow Power Supply Co., Ltd., Hefei, Anhui 230088 (CN)
(72) Inventor: ZHAO, Wei, Hefei, Anhui 230088 (CN); MEI, Xiaodong, Hefei, Anhui 230088 (CN); ZHANG, Xianli, Hefei, Anhui 230088 (CN); CHEN, Wei, Hefei, Anhui 230088 (CN); SHEN, Tan, Hefei, Anhui 230088 (CN); LI, Shun, Hefei, Anhui 230088 (CN); LU, You, Hefei, Anhui 230088 (CN)
(74) Representative: Eisenführ Speiser

(57) **Abstract**

A photovoltaic inverter system is provided, in which multiple independent inverter units are arranged in a housing, and each of the independent inverter units has independent MPPT function, such that the PV inverter system have multiple MPPT control. In the complex scene such as hills, a maximum power generation of each photovoltaic string can be realized to ensure system energy yield in a case of partial shading or inconsistent orientation. Since independent inverter units are all arranged in the housing, it is convenient for the installation, operation and maintenance.

## Description

### TECHNICAL FIELD

The present disclosure relates to the field of photovoltaic inverter technology, and in particular to a photovoltaic inverter system.

### BACKGROUND

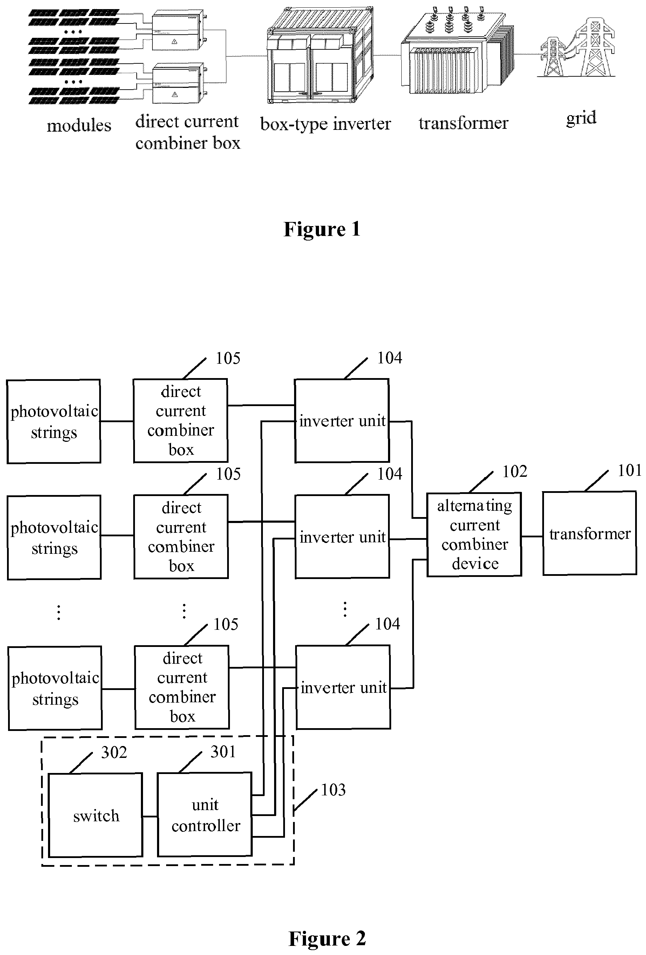

Referring to Figure 1, a central inverter solution in a current photovoltaic inverter system includes a multi-channel direct current combiner device, a box-type inverter (or an inverter house, or a container) and a box-type transformer.

An output of a string of cell panels is connected with a near direct current combiner device, which combines power of direct current strings to the box-type inverter through wires. An output terminal of the box inverter is directly connected with the grid through the box type transformer.

However, in this solution, the inverter system has a small amount of Maximum Power Point Tracking (MPPT) control. In a complex scene such as hills, system energy yield is low in a case of partial shading or inconsistent orientation.

### SUMMARY

A photovoltaic inverter system is provided according to the present disclosure, to address the issue of a small amount of MPPT control in the conventional art.

In order to achieve the above object, the technical solution provided by the present disclosure is as follows.

A photovoltaic inverter system, including a transformer, an alternating current combiner device, a communication device, multiple independent inverter units and a multi-channel direct current combiner device; where,
input terminals of the multi-channel direct current combiner device are connected with multiple photovoltaic strings in one-to-one correspondence;
the multiple independent inverter units are arranged in a housing;
input terminals of the multiple independent inverter units are connected with output terminals of the multi-channel direct current combiner device in one-to-one correspondence;
output terminals of the multiple independent inverter units are all connected with an input terminal of the alternating current combiner device;
an output terminal of the alternating current combiner device is connected with a low voltage side of the transformer; and
one terminal of the communication device is a communication terminal of the photovoltaic inverter system and the other terminal is connected with control terminals of the multiple independent inverter units.

Preferably, the housing is a box-type casing, a house or a container for enclosing the multiple independent inverter units.

Preferably, the housing is a one-piece platform; the one-piece platform includes:
a base, arranged with the multiple independent inverter units; or
a base arranged with the multiple independent inverter units and a cover which is arranged above the multiple independent inverter units.

Preferably, the communication device includes an unit controller and a switch;
one terminal of the unit controller is connected with the control terminals of the multiple independent inverter units;
the other terminal of the unit controller is connected with one terminal of the switch; and
the other terminal of the switch is the communication terminal of the photovoltaic inverter system.

Preferably, each of the multiple independent inverter units is a direct-current/alternating-current (DC/AC) converter.

Preferably, at least one of the multiple independent inverter units further includes a direct-current/direct-current (DC/DC) converter; and an output terminal of the DC/DC converter is connected with an input terminal of the DC/AC converter.

Preferably, each of the multiple independent inverter units is string inverters.

Preferably, the system further includes a ventilation duct and a smoke sensor arranged in the housing.

Preferably, the alternating current combiner device and the communication device are arranged in the housing.

Preferably, the communication terminal of the photovoltaic inverter system is connected with a back end of the power station by an optical fiber.

In the photovoltaic inverter system according to the present disclosure, multiple independent inverter units are arranged in a housing. Each of the independent inverter units has independent MPPT function which makes the PV inverter system have multiple MPPT control. In the complex scene such as hills, a maximum power generation of each photovoltaic string can be realized to ensure system energy yield in a case of partial shading or inconsistent orientation.

### BRIEF DESCRIPTION OF THE DRAWINGS

In order to illustrate technical solutions in embodiments of the present disclosure or in the conventional technology more clearly, drawings used in the description of the embodiments or the conventional technology are introduced briefly hereinafter. Apparently, the drawings described hereinafter merely illustrate some embodiments of the present disclosure, and other drawings may be obtained by those skilled in the art based on these drawings without any creative efforts.
Figure 1 is a structural diagram of a central photovoltaic inverter system in the conventional art;
Figure 2 is a schematic structural diagram of a photovoltaic inverter system according to an embodiment of the present disclosure;
Figure 3 is a structural diagram of a photovoltaic inverter system according to another embodiment of the present disclosure;
Figure 4 is another structural diagram of a photovoltaic inverter system according to another embodiment of the present disclosure;
Figure 5 is a structural diagram of a distributed photovoltaic inverter system in the conventional art; and
Figure 6 is a schematic layout of an interior of a housing according to another embodiment of the present disclosure.

### DETAILED DESCRIPTION OF THE EMBODIMENTS

For a better understanding of the objective, technical features and advantages of the present disclosure, embodiments of the present disclosure is described in detail in conjunction with drawings.

A photovoltaic inverter system is provided according to the present disclosure, to address the issue of a small amount of MPPT control in the conventional art.

Referring to Figure 2, the photovoltaic inverter system includes a transformer 101, an alternating current combiner device 102, a communication device 103, multiple independent inverter units 104 and a multi-channel direct current combiner device 105.

Input terminals of the multi-channel direct current combiner device 105 are connected with multiple photovoltaic strings in one-to-one correspondence.

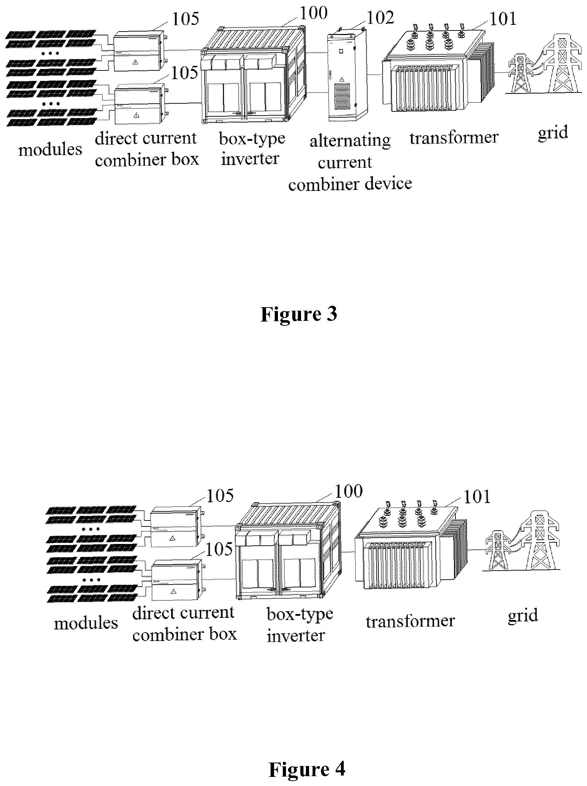

Referring to Figure 3, the multiple independent inverter units 104 are arranged in a housing 100.

Input terminals of the multiple independent inverter units 104 are connected with output terminals of the multi-channel direct current combiner device 105 in one-to-one correspondence.

Output terminals of the multiple independent inverter units 104 are all connected with an input terminal of the alternating current combiner device 102.

An output terminal of the alternating current combiner device 102 is connected with a low voltage side of the transformer 101.

One terminal of the communication device 103 is a communication terminal of the photovoltaic inverter system and the other terminal is connected with control terminals of the multiple independent inverter units 104.

In a specific implementation, the communication device 103 may be arranged near the housing 100 in a form of a communication cabinet, and the alternating current combiner device 102 may be arranged outside the housing 100. This arrangement is described only as an example, and is not intended to limit. Other arrangements also fall within the scope of the present disclosure.

The specific working principle is described below.

An output of each of the photovoltaic strings is converged by the corresponding direct current combiner device 105, and then transmitted into the housing 100 through two direct current wires (+/-).

The housing 100 provides a direct current interface, i.e., the input terminals of the multiple independent inverter units 104, which are connected with the output terminals of the direct current combiner device 105 in one-to-one correspondence.

The multiple independent inverter units 104 perform inverting under the control of the corresponding MPPT. The power is combined by the alternating current combiner device 102 and outputted to the low voltage side of the transformer 101 (e.g. a box-type transformer).

One terminal of the communication device 103 is a communication terminal of the photovoltaic inverter system, which is connected with a back end of the power station.

In a specific implementation, a system of 1 MW is taken for example. An independent inverter unit 104 has a power of 50 kW and includes three paths of MPPT control. The system of 1 MW has 20*3 = 60 paths of MPPT control, which can be better applied in complex scenes such as a hill power station.

Therefore, the photovoltaic inverter system according to the present embodiment has multiple MPPT control. In the complex scene such as hills, a maximum power generation of each photovoltaic string can be realized to ensure system energy yield in a case of partial shading or inconsistent orientation.

In addition, each of the independent inverter units 104 is uniformly arranged in the housing 100, i.e., they are pre-installed in the housing 100 and connected with the direct current combiner device 105 through the direct current interface, which not only facilitate fast installation on-site because the overall system is simple, but also facilitates the uniform management, operation and maintenance because all the core devices are arranged in the housing 100. In a specific implementation, the independent inverter unit 104 weighs about 50 Kg, which may be quickly replaced without a professional. Compared with the string inverter solution in the conventional art, in which independent inverter units are distributed in an array of the power station(particularly in a hill power station), the operation and maintenance may be better performed in a timely manner and the difficulty thereof is greatly reduced using the photovoltaic inverter system described in this embodiment.

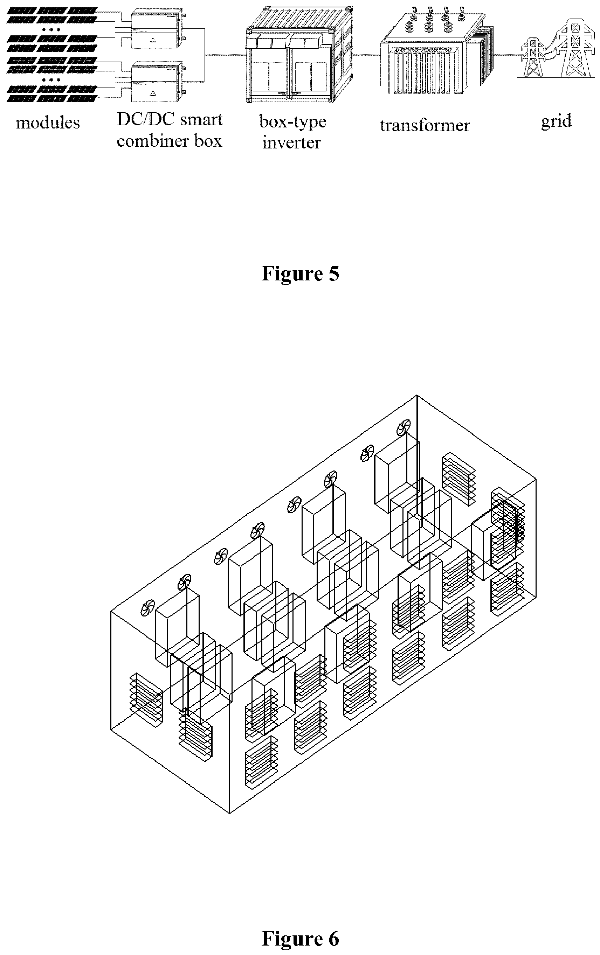

It should be noted that the PV inverter system in the convenient art also has a distributed inverter solution as shown in Figure 5. An output of a string of cell panels is connected with a near DC/DC smart combiner box, which combines power of direct current strings to the box-type inverter through wires. An output terminal of the box-type inverter is directly connected with the grid through the box-type transformer. The DC/DC smart combiner box has the MPPT function. However, due to the long transmission wire from the DC/DC smart combiner box to a downstream box-type inverter, in a case that a high frequency direct current voltage outputted by the DC/DC smart combiner box is transmitted for a long time, a large parasitic capacitance to the ground is generated on the transmission wire, which causes a large high-frequency leakage current in the system, thereby reducing the system efficiency and reliability, and resulting in a large number of damaged DC/DC smart combiner box on-site. Further, there is no quick coordination mechanism between the DC/DC combiner box and the box-type inverter. The coordination of the system is perform only through a communication line, resulting in a low response speed of the system, and thus more faults of the system. For example, in a case of low voltage ride through in the alternating current grid, an action of the DC/DC combiner box is delayed due to the communication delay, which results in a rapid rise in direct current bus voltage and thus causes failure. It is difficult for the distributed inverter to pass compulsory tests of the grid such as the low voltage ride through, which is an important reason to limit the development of the distributed inverter.

Referring to Figure 3, with the photovoltaic inverter system according to this embodiment, the communication device 103 may be arranged near the housing 100 in a form of a communication cabinet. Through a high speed communication between the communication device 103 and the independent inverter units 104 in a short distance, the system can quickly respond to the active and reactive dispatch of the grid. In particular, the reactive capacity of the communication device 103 may be extended in later period, so as to replace the SVG (Static Var Generator) in a large power station.

In summary, with the photovoltaic inverter system according to the present embodiment, by the pre-installation of the independent inverter units 104 in the housing 100 and a high speed communication between the communication device 103 and the independent inverter units 104, a combination of advantages of multiple MPPT control, centralized management, unified connection to the box-type transformer 101, and easy operation and maintenance is realized.

In a specific implementation, the housing 100 may be a one-piece platform.

The one-piece platform includes a base arranged with the multiple independent inverter units 104.

Alternatively, the one-piece platform includes a base arranged with the multiple independent inverter units 104 and a cover which is arranged above the multiple independent inverter units 104.

Optionally, as shown in Figure 3, the housing 100 is a box-type casing, a house or a container for enclosing the multiple independent inverter units 104.

In a case that the housing 100 is a box-type inverter casing, an inverter house or a container for enclosing the independent inverter units 104 as shown in Figure 3, preferably, the photovoltaic inverter system further includes a ventilation duct and a smoke sensor arranged in the housing 100.

The entire housing 100 and its internal structure depend on requirements of an installation scene, which are not limited herein. Any structures fall within the scope of the present disclosure.

In a case that the housing 100 is a one-piece platform, the internal inverter unit 104 may be a device having a higher ingress protection level. In the case that the housing 100 is a box-type inverter casing, an inverter house or a container for enclosing the independent inverter units 104 as shown in Figure 3, since the box-type inverter casing, the inverter house or the container itself has a ingress protection level (e.g., IP54), the ingress protection level of the independent inverter units 104 may be IP65 (e.g., the conventional string inverters) or may be a lower level such as IP21 (a power unit including a boost unit and an independent inverter unit, or only an independent inverter unit).

Therefore, another photovoltaic inverter system is provided according to another embodiment of the present disclosure. The independent inverter units 104 in Figure 2 may be DC/AC converters. Optionally, at least one of the multiple independent inverter units 104 may include a DC/DC converter. An output terminal of the DC/DC converter is connected with an input terminal of the DC/AC converter.

Optionally, each of the independent inverter units 104 is string inverters.

Multiple independent inverter units having MPPT functions are arranged together (in a container or the like) to form multiple MPPT control.

In addition, referring to Figure 2, the communication device 103 includes a unit controller 301 and a switch 302.

One terminal of the unit controller 301 is connected with control terminals of the multiple independent inverter units 104.

The other terminal of the unit controller 301 is connected with a terminal of the switch 302.

The other terminal of the switch 302 is the communication terminal of the photovoltaic inverter system.

The unit controller 301 is configured to manage the independent inverter units 104 in the housing 100, and is in high speed communication with the independent inverter units 104, such that the system responds quickly to the active and reactive dispatching of the grid.

A specific implementation of the inverter unit 104 and the communication device 103 is given in this embodiment, which is only an example and is not intended to limit. Other implementations may be determined according to application conditions and also fall within the scope of the present disclosure.

Another photovoltaic inverter system is provided according to another embodiment of the present disclosure. On the basis of Figure 2, preferably, referring to Figure 4, the alternating current combiner device 102 and the communication device 103 are arranged in the housing 100, such that the housing 100 has the following terminals to be connected to an external device.

An input terminal, which is a direct current interface of the housing 100, is connected with the output terminal of the direct current combiner device 105.

An output terminal, which is an alternating current interface of the housing 100, is connected with the low-voltage side of the transformer 101.

A communication terminal, which is a communication interface of the housing 100, is connected with a back end of the power station.

The housing 100 has a small number of interfaces. After the internal inverter units 104 are pre-installed in the housing, the housing is connected with the low voltage side of the transformer 101 through the alternating current interface, which not only facilitate fast installation on-site because the overall system is simple, but also facilitates the uniform management, operation and maintenance because all the core devices are arranged in the housing 100, that is, replacement may be performed quickly without a professional, and operation and maintenance may be performed in a timely manner.

Preferably, the communication terminal of the housing 100 is connected with a back end of the power station by an optical fiber.

The optical fiber connection can ensure a high-speed communication, which is beneficial to the application of the photovoltaic inverter system.

In a specific implementation, the arrangement of the independent inverter units 104 in the housing 100 may be flexible as required. For example, they may be installed on a wall, be installed on the ground or be installed in a stack as required. Figure 6 illustrates a layout of the independent inverter units 104 in the housing 100, which however is not intended to limit. Other layouts fall within the scope of the present disclosure.

The specific working principle is the same as that of the above embodiment and will not be repeated here.

The embodiments of the present disclosure are described in a progressive way, differences from other embodiments are emphatically illustrated in each of the embodiments, and reference can be made to each other for understanding the same or similar parts. For the device embodiments, since they correspond to the method embodiments, the description is relatively simple and reference can be made to the description of the method for the related part.

The above descriptions are only preferred embodiments of the present disclosure and are not intended to limit the present disclosure in any forms. Those skilled in the art can make various changes and modifications to the technical solution of the present disclosure without departing from the scope of the present disclosure, or can modify the technical solution to equivalent embodiments. Therefore, any changes, equivalents and modifications which are made within the spirit and principle of the present disclosure shall fall within the protection scope of the present disclosure.

## Claims

1. A photovoltaic inverter system, comprising:
a transformer,
an alternating current combiner device,
a communication device,
a plurality of independent inverter units, and
a multi-channel direct current combiner device, wherein,
input terminals of the multi-channel direct current combiner device are connected with a plurality of photovoltaic strings in one-to-one correspondence;
the plurality of independent inverter units are arranged in a housing;
input terminals of the plurality of independent inverter units are connected with output terminals of the multi-channel direct current combiner device in one-to-one correspondence;
output terminals of the plurality of independent inverter units are all connected with an input terminal of the alternating current combiner device;
an output terminal of the alternating current combiner device is connected with a low voltage side of the transformer; and
one terminal of the communication device is a communication terminal of the photovoltaic inverter system and the other terminal is connected with control terminals of the plurality of independent inverter units.

2. The photovoltaic inverter system according to claim 1, wherein the housing is a box-type casing, a house or a container for enclosing the plurality of independent inverter units.

3. The photovoltaic inverter system according to claim 1, wherein the housing is a one-piece platform, the one-piece platform comprises:
a base arranged with the plurality of independent inverter units; or
a base arranged with the plurality of independent inverter units and a cover which is arranged above the plurality of independent inverter units.

4. The photovoltaic inverter system according to claim 1, wherein
the communication device comprises an unit controller and a switch;
one terminal of the unit controller is connected with the control terminals of the plurality of independent inverter units;
the other terminal of the unit controller is connected with one terminal of the switch; and
the other terminal of the switch is the communication terminal of the photovoltaic inverter system.

5. The photovoltaic inverter system according to claim 1, wherein each of the plurality of independent inverter units is a direct-current/alternating-current (DC/AC) converter.

6. The photovoltaic inverter system according to claim 5, wherein
at least one of the plurality of independent inverter units further comprises a direct-current/direct-current (DC/DC) converter; and
an output terminal of the DC/DC converter is connected with an input terminal of the DC/AC converter.

7. The photovoltaic inverter system according to claim 1, wherein each of the plurality of independent inverter units is string inverters.

8. The photovoltaic inverter system according to claim 2, further comprising a ventilation duct and a smoke sensor arranged in the housing.

9. The photovoltaic inverter system according to any one of claims 1 to 8, wherein the alternating current combiner device and the communication device are arranged in the housing.

10. The photovoltaic inverter system according to any one of claims 1 to 8, wherein the communication terminal of the photovoltaic inverter system is connected with a back end of the power station by an optical fiber.
